## Europäisches Patentamt

(19) **European Patent Office**

**Office européen des brevets**

(11) Veröffentlichungsnummer: **0 011 791**
**B1**

(12) **EUROPÄISCHE PATENTSCHRIFT**

(45) Veröffentlichungstag der Patentschrift:
**28.07.82**

(21) Anmeldenummer: **79104559.4**

(22) Anmeldetag: **19.11.79**

(51) Int. Cl.³: **B 60 C 3/00**, B 60 C 5/00 //
**B60B17/02**

(54) **Reifen für hohe Traglasten.**

(30) Priorität: **30.11.78 DE 2851765**

(43) Veröffentlichungstag der Anmeldung:
**11.06.80 Patentblatt 80/12**

(45) Bekanntmachung des Hinweises auf die Patenterteilung:
**28.07.82 Patentblatt 82/30**

(84) Benannte Vertragsstaaten:
**AT BE DE FR GB IT NL**

(56) Entgegenhaltungen:
**DE-A-2 455 120**
**DE-A-2 456 418**
**FR-A-37 431**
**FR-A-404 163**
**FR-A-681 464**
**FR-A-712 697**
**FR-A-727 933**
**FR-A-746 067**
**FR-A-1 316 371**
**FR-A-2 302 874**
**FR-A-2 320 196**
**US-A-1 359 949**
**US-A-2 477 754**
**US-A-3 234 989**

(73) Patentinhaber: **BAYER AG, Zentralbereich Patente,**
**Marken und Lizenzen, D-5090 Leverkusen 1, Bayerwerk**
**(DE)**

(72) Erfinder: **Ippen, Jakob, Dr., Schleiermacherstrasse 17,**
**D-5090 Leverkusen 1 (DE)**
Erfinder: **Stüttgen, Friedel, Albrecht-Dürer-Strasse 94,**
**D-5024 Pulheim (DE)**

Reifen für hohe Traglasten

Die Erfindung betrifft einen Reifen für hohe Traglasten, bestehend aus einem flachen Ring, dessen Breite mindestens den doppelten Wert der maximalen Höhe besitzt, mit Drahkernen auf einer Metallfelge, die gleichzeitig einen Teil des Luftraumes bildet.

Es sind Versuche bekannt, moderne Nahverkehrsmittel (Kabinenbahnen) mit Rädern auszustatten, die aus einem Stahlring bestehen, auf denen eine Gummilauffläche aufvulkanisiert ist.

Bei der praktischen Erprobung solcher Reifen stellte sich heraus, dass sie für hohe Traglasten bei grossen Geschwindigkeiten nicht geeignet sind, denn im Dauerbetrieb löst sich die Gummilauffläche von dem Stahlring. Auch Versuche — durch andere Haftvermittler oder Gummi-Mischungen die Haftfähigkeit zu verbessern — haben bisher nicht zu dem gewünschten Erfolg geführt. Weiter sind Luftreifen bekannt, die auf eine Stahlfelge aufgezogen werden.

Durch den grossen Federweg wird ein unruhiger Lauf der Schienenfahrzeuge erzeugt, der den Fahrkomfort in unerwünschter Weise vermindert. Weiter erfordern Luftreifen einen wesentlich grösseren Einbauraum, der oft nicht zur Verfügung steht.

Der Erfindung liegt die Aufgabe zugrunde, einen Reifen für hohe Traglasten zu finden, der eine geringe Einfederungscharakteristik besitzt und im Dauerbetrieb auch bei hoher Geschwindigkeit fest mit dem Stahlkörper verbunden bleibt.

Diese Aufgabe wird erfindungsgemäss dadurch gelöst, dass der aus mehreren Schichten zusammengesetzte flache Ring, bei dem die radiale Projektion der Drahtkerne mindestens teilweise unter einer Gürteleinlage liegt, an den beiden Umfangsflächen einer zweiteilten Metallfelge in radialer Richtung anliegt und durch je eine einstückig an die beiden Metallfelgenteile angeformte Schulter axial begrenzt ist.

Die mit der Erfindung erzielten Vorteile bestehen insbesondere darin, dass eine festlegbare Einfederungscharakteristik eingehalten werden kann, da die auftretenden Druck-, Schub- und Biegungskräfte im voraus bestimmbar sind. Darüber hinaus wird durch den innen aufgebrachten Luftdruck der Reifen auch bei hohen Beanspruchungen sicher gehalten. Ein weiterer Vorteil besteht darin, dass der Reifen auch bei Druckverlust über Notlaufeigenschaften verfügt. Auch erlaubt die Konstruktion, den Reifen weitgehend vereinfacht bzw. automatisch herzustellen. Weiter wird durch die Anordnung von Gürteleinlage und Drahtkerne erreicht, dass die Kräfte aus der Gürteleinlage sicher über den Drahtkern an den Felgen weitergeleitet werden.

Nach einer weiteren Ausführungsform beträgt der Laufflächenradius zwischen 100 und 200% der Reifenbreite, vorzugsweise 150%.

Durch den Laufflächenradius kann die Höhe des Rollwiderstandes bzw. Erwärmung des Reifens weitgehend beeinflusst werden. Ferner ist die Ausrundung bei dieser Reifenkonstruktion die Vorgabe einer bestimmten Druckverteilung der vom Boden übertragenen Gegenkräfte möglich.

In einer anderen Ausführung ist die Lauffläche des Ringes bogenförmig ausgebildet, wobei der Radius 10 bis 30%, vorzugsweise 15%, der Reifenbreite beträgt.

Durch die Abrundung werden bei einseitigem Anngriff der Fahrbahnkräfte ungünstige Spannungen in den Schultern des Ringreifens vermieden.

In einer Ausführung ist zwischen und am Umfang der geteilten Felge eine umlaufende Dichtung angeordnet.

Trotz Fertigungsungenauigkeit der aneinanderstossenden Flächen von Felge zu Felge und Felge zum Reifen kann durch die Dichtung der gewünschte Luftdruck im Luftraum sicher gehalten werden.

Ausführungsbeispiele der Erfindung sind in der Zeichnung dargestellt und werden im folgenden näher beschrieben. Es zeigen

Fig. 1 Schnitt durch einen Reifen mit seitlicher Führung am Rande

Fig. 2 Schnitt durch Felge mit gleichbreitem Ringreifen

Fig. 3 Schnitt durch Wickelwerkzeug im Anfangsstadium der Fertigung

Fig. 4 Schnitt durch Wickelwerkzeug nach Auftragung aller Schichten

Fig. 5 Federungskennlinie

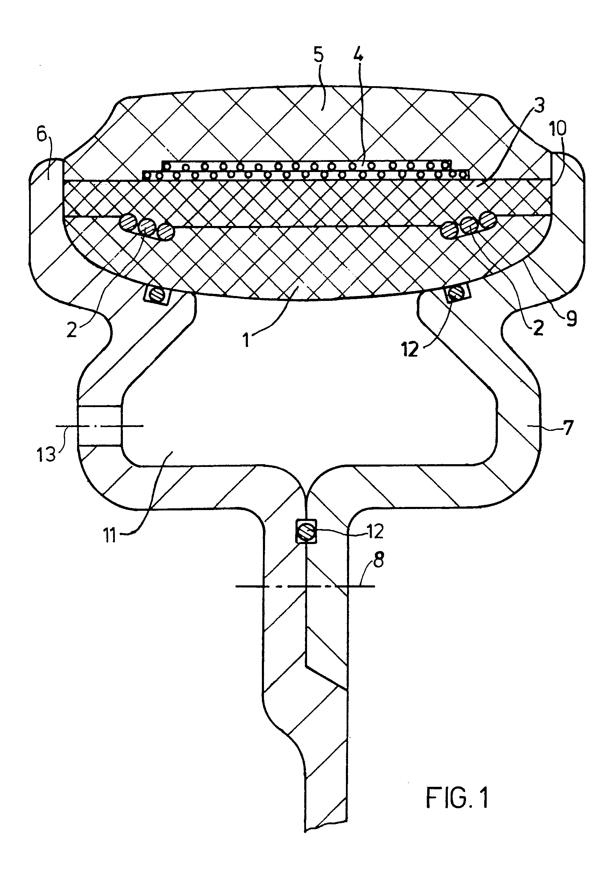

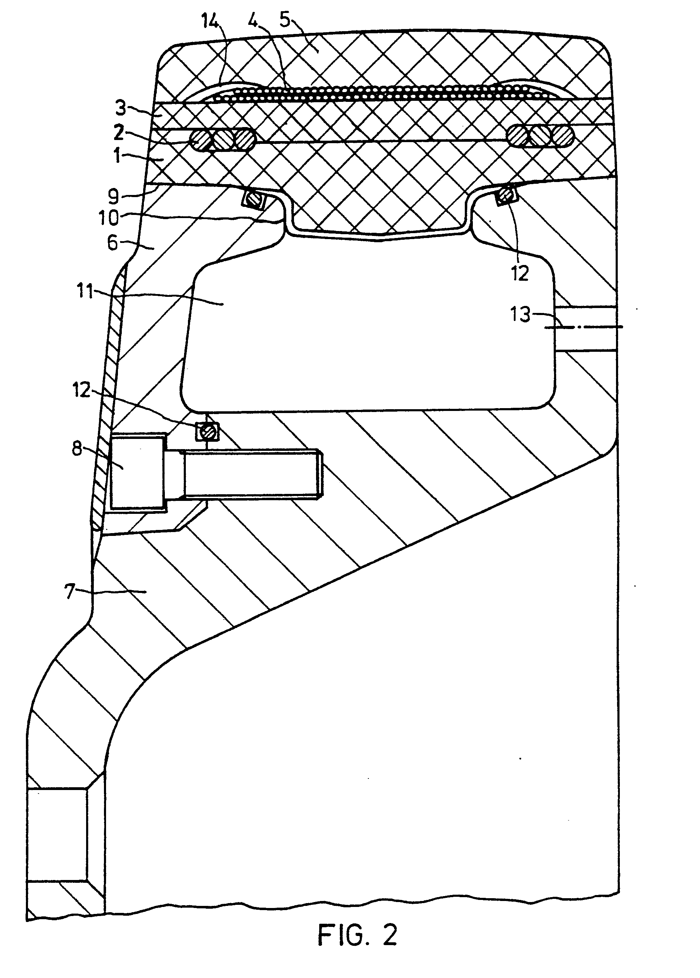

In Fig. 1, 2 ist ein Ringreifen, der aus Unterschicht 1, Drahtkerne 2, Mittelschicht 3, Gürteleinlage 4 und Laufschicht 5 besteht, in einer zweigeteilten Felge 6, 7 dargestellt, die untereinander mit zur Montage des Ringreifens lösbaren Schrauben 8 verbunden sind.

Der Ringreifen ist auf den Umfangsflächen 9 der Felge abgestützt und wird gegen seitliches Verschieben durch Flächen 10 oder Aufkantung 10 gehalten. Der Luftraum 11 ist nach aussen durch umlaufende Dichtungen 12 und Ventil 13 abgeschlossen.

Weiter ist in Fig. 2 eine Abdeckschicht 14 über die Ränder der Gürteleinlage 4 dargestellt.

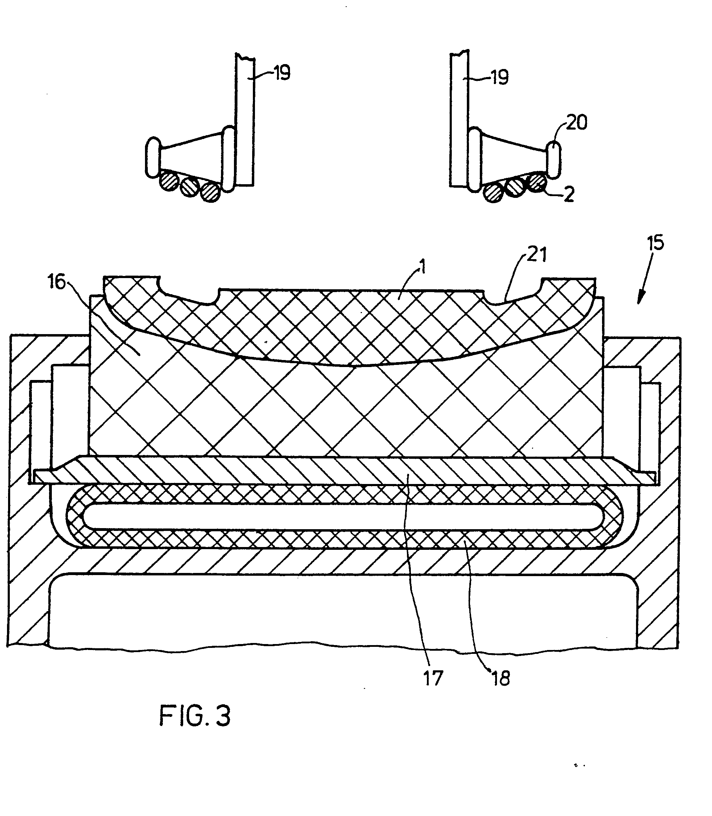

In Fig. 3 werden die ersten Arbeitsgänge der Herstellung eines Ringreifens gezeigt. Auf einer einfachen Expansionstrommel 15 wird eine Gummimanschette 16 mit der geforderten inneren Kontur des Ringreifens aufgezogen. Die Gummimanschette 16 wird wiederum von einem segmentierten Stahlring 17 gestütz, der durch Expansionsbalge 18 radial nach aussen verschiebbar ist. Die Unterschicht 1 des Ringreifens, welche z.B. durch Extrudierung vorgeformt sein kann, wird nach Ablängung auf der Gummimanschette 16 endlos verbunden. Danach fahren die verstellbaren Kernhalterungen 19 den Kernhalter 20 mit den Drahtkernen 2 über die

in der Unterschicht 1 vorgesehene Aussparung 21.

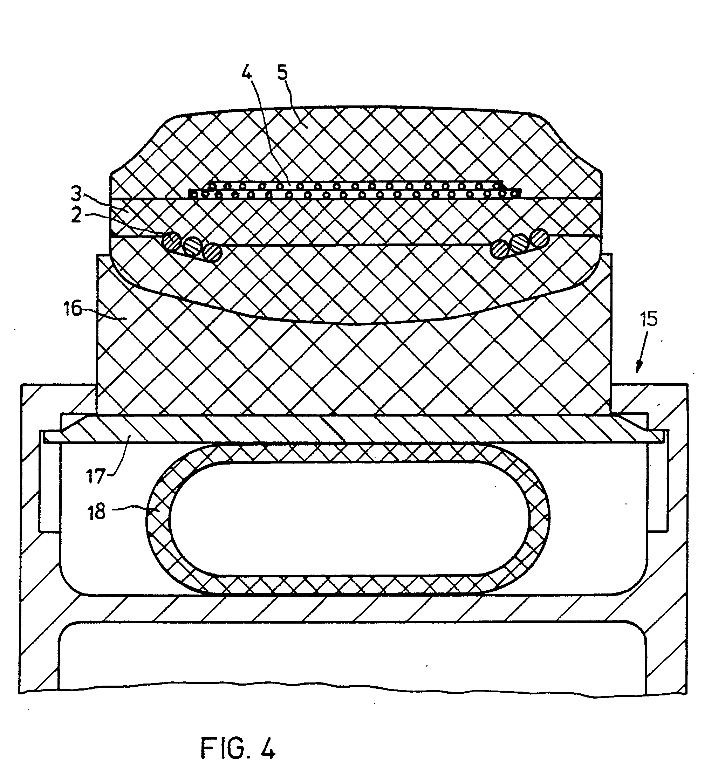

In Fig. 4 ist der Expansionsbalg 18 mit Luft gefüllt und hat über Stahlring 17 und Gummimanschette 16 die Unterschicht 1 gegen den Drahtkern (2) gepresst. Danach wird nacheinander die Mittelschicht 3, die Gürteleinlage 4 sowie die Laufschicht 5 aufgebracht und endlos gemacht.

Nach Ablassen der Luft aus dem Expansionsbalg 18 kann der Reifen der Presse entnommen und der Heizpresse zugeführt werden.

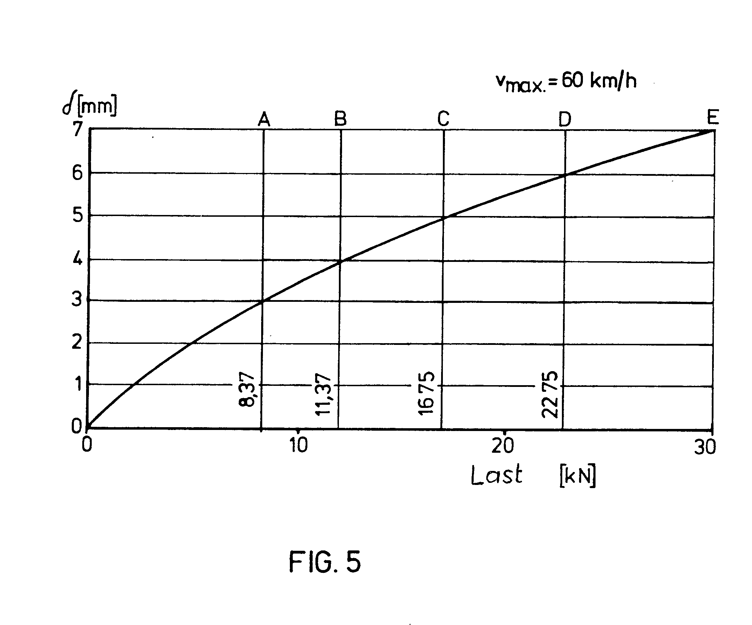

In Fig. 5 ist der Federweg in Abhängigkeit von der Belastung bei einer Geschwindigkeit von 60 km/h gezeichnet. Es bedeuten

A Einfederung bei Belastung des Reifens durch Eigenlast auf gerader Strecke,

B Einfederung bei Belastung des Reifens durch Eigen- und Verkehrslast auf gerader Strecke,

C Einfederung bei Belastung des Reifens durch Eigenlast in einer Weiche,

D Einfederung bei Belastung des Reifens durch Eigen- und Verkehrslast in einer Weiche,

E Einfederung bei Belastung des Reifens durch Eigen- und Verkehrslast in einer Weiche bei gleichzeitigem Bremsen.

Die Reifen der Erfindung können aus jedem beliebigen Natur- oder Synthesekautschuk hergestellt werden, dessen Vulkanisate eine Shore-A-Härte von 55 bis 90 und einen Spannungswert von 110 bis 210 kg/cm² bei 300% Dehnung aufweisen. Besonders geeignet sind Natur-, Styrolbutadien-, Polybutadien- und Äthylenpropylen-Terpolymerisatkautschuke.

## Patentansprüche

1. Reifen für hohe Traglasten, bestehend aus einem flachen Ring (1-5), dessen Breite mindestens den doppelten Wert der maximalen Höhe besitzt, mit Drahtkernen (2), auf einer Metallfelge (6, 7), die gleichzeitig einen Teil des Luftraumes (11) bildet, dadurch gekennzeichnet, dass der aus mehreren Schichten zusammengesetzte flache Ring (1-5), bei dem die radiale Projektion der Drahtkerne (2) mindestens teilweise unter einer Gürteleinlage (4) liegt, an den beiden Umfangsflächen (9) einer zweigeteilten Metallfelge in radialer Richtung anliegt und durch je eine einstückig an die beiden Metallfelgenteile (6, 7) angeformte Schulter (10) axial begrenzt ist.

2. Reifen nach Anspruch 1, dadurch gekennzeichnet, dass der Laufflächenradius zwischen 100 und 200% der Breite des Reifens, vorzugsweise 150%, beträgt.

3. Reifen nach Anspruch 1 bis 2, dadurch gekennzeichnet, dass die Laufschicht (5) am Rande bogenförmig ausläuft, wobei der Radius 10 bis 30%, vorzugsweise 15%, der Breite des Reifens beträgt.

4. Reifen nach Anspruch 1 bis 3, dadurch gekennzeichnet, dass zwischen und am Umfang der geteilten Felge je eine umlaufende Dichtung (12) angeordnet ist.

## Claims

1. A tyre for heavy loads, consisting of a flat ring (1-5), the width of which is at least twice the maximum height thereof, with wire cores (2), on a metal felloe (6, 7), which at the same time forms a part of the air space (11), characterised in that the flat ring (1-5), which is composed of a plurality of layers and in which the radial projection of the wire cores (2) lies at least partly under a breaker strip (4), lies against the two circumferential surfaces (9) of a two-part metal felloe in a radial direction and is axially confined by two shoulders (10), each shoulder being formed in one piece on one of the two metal felloe parts (6, 7).

2. A tyre according to Claim 1, characterised in that the tread surface radius is between 100 and 200% the width of the tyre, preferably 150%.

3. A tyre according to Claim 1 to 2, characterised in that the tread surface layer (5) is curved at the edge, the radius being from 10 to 30%, preferably 15% of the width of the tyre.

4. A tyre according to Claim 1 to 3, characterised in that one circumferential seal (12) is provided between and one (12) on the circumference of each part of the felloe.

## Revendications

1. Pneumatique pour de grandes charges, consistant en un anneau plat (1-5) dont la largeur est au moins égale au double de sa hauteur maximale, avec des tringles (2) sur une jante métallique (6, 7) que forme une partie de la chambre à air (11), caractérisé par le fait que l'anneau plat (1-5) constitué de plusieurs couches, dans lequel la projection radiale des tringles (2) se trouve au moins partiellement sous une ceinture incorporée (4), est appliqué dans le sens radial sur les deux surfaces périphériques (9) d'une jante métallique en deux parties, et est retenu axialement par un épaulement (10) formant corps avec chacune des deux parties respectives (6, 7) de la jante métallique.

2. Pneumatique selon la revendication 1, caractérisé par le fait que le rayon de la surface de roulement est égal à 100-200%, de préférence à 150% de la largeur du pneumatique.

3. Pneumatique selon les revendications 1 à 2, caractérisé par le fait que le bord de la couche de roulement (5) est arrondi, auquel cas le rayon est égal à 10-30%, de préférence à 15% de la largeur du pneumatique.

4. Pneumatique selon les revendications 1 à 3, caractérisé par le fait qu'une garniture périphérique d'étanchéité (12) respective se trouve entre les parties de la jante subdivisée et sur la circonférence de cette dernière.

FIG. 1

FIG. 2

FIG. 3

FIG. 4

FIG. 5